# EUROPÄISCHE PATENTANMELDUNG

(11) **EP 2 199 058 A1**
(43) Veröffentlichungstag der Anmeldung: **23.06.2010**
(21) Anmeldenummer: 09013329.9
(22) Anmeldetag: 22.10.2009
(51) Int. Cl.: B29C 45/73, B29C 33/04, B29C 35/04, B29C 51/42

(54) **Verfahren zur zyklusabhängigen Temperierung eines Spritzgieß- oder Thermoformwerkzeuges**

(30) Priorität: 17.12.2008 DE 102008062433
(71) Anmelder: Werkzeugbau Siegfried Hofmann GmbH, 96215 Lichtenfels (DE)
(72) Erfinder: Hofmann, Günter, 96215 Lichtenfels (DE); Collisi, Jörg, 13089 Berlin (DE); Hoetger, Michael, 14193 Berlin (DE)
(74) Vertreter: Hafner, Dieter

(57) **Zusammenfassung**

Die Erfindung betrifft ein Verfahren zur zyklusabhängigen Temperierung eines Spritzgieß- oder Thermoformwerkzeuges, wobei das Werkzeug 1 innerhalb wenigstens eines ersten Zyklenabschnittes A gezielt aufgeheizt und innerhalb wenigstens eines zweiten Zyklenabschnittes B gezielt gekühlt wird, wozu in dem Werkzeug 1 angeordnete Heiz-/Kühlkanäle von wenigstens einem die Form aufheizenden oder abkühlenden Medium 2 durchströmt werden, wobei sowohl als Kühl- als auch als Heizmedium 2 im Nassdampfgebiet gehaltener Flüssigkeitsdampf verwendet wird, wobei der Flüssigkeitsdampf während einer Aufheizphase A mit hohem Druck und während einer Abkühlphase B mit niedrigem Druck beaufschlagt wird.

## Beschreibung

Die Erfindung betrifft ein Verfahren zur zyklusabhängigen Temperierung eines Spritzgieß- oder Thermoformwerkzeuges, wobei das Werkzeug innerhalb erster Zyklenabschnitte gezielt aufgeheizt und innerhalb zweiter Zyklenabschnitte gezielt gekühlt wird, wozu in dem Werkzeug angeordnete Heiz-/Kühlkanäle von wenigstens einem die Form aufheizenden oder abkühlenden Medium durchströmt werden.

Weiterhin betrifft die Erfindung auch eine Vorrichtung zur Durchführung des vorstehend bezeichneten Verfahrens.

Als Stand der Technik sind temperierbare Spritzgieß- oder Thermoformwerkzeuge bekannt. Ein Verfahren zur Kühlung und Heizung solcher Werkzeuge ergibt sich z.B. aus DE 10 2005 036 437 B3. Hierbei besitzt ein Kunststoffspritzgießwerkzeug zwei Temperiermittelkreisläufe, die synchron zum Spritzzyklus geregelt werden. Die Temperiermittelkreisläufe können unterschiedlich temperiert werden und/oder unterschiedliche Durchflusszeiten in der vom Heiz-/Kühlmedium durchsetzten Formhälfte ermöglichen.

Der Erfindung liegt die Aufgabe zugrunde, ein Verfahren zur zyklusabhängigen Temperierung eines Spritzgieß- oder Thermoformwerkzeuges mit den Merkmalen des Oberbegriffs des Anspruches 1 derart auszubilden, dass ein steilerer Temperaturanstieg und -abfall, höhere Maximaltemperaturen, stabilere Temperaturtableaus, unter Umständen auch gestufte Temperaturtableaus und kürzere Zykluszeiten ermöglicht werden. Eine weitere Aufgabe ist es, das Kühlen und Heizen der Form auf vereinfachte Art und Weise zu ermöglichen. Ferner soll das Verfahren durch zusätzliche Komponenten zur Restenergienutzung des Mediums nach Austritt aus dem Werkzeug eine verbesserte Gesamtenergiebilanz aufweisen.

Diese Aufgabe wird durch die Merkmale des Anspruches 1 sowie der das Verfahren anwendenden Vorrichtung gemäß Anspruch 13 gelöst. Vorteilhafte Weiterbildungen der Erfindung ergeben sich aus den Unteransprüchen 2 - 12 bzw. 14 und 15.

Als Kern der Erfindung wird es zunächst angesehen, sowohl als Kühl- als auch als Heizmedium im Nassdampfgebiet gehaltenen Flüssigkeitsdampf zu verwenden, wobei der Flüssigkeitsdampf während einer Aufheizphase mit hohem Druck und während einer Abkühlphase mit niedrigerem Druck beaufschlagt wird. Flüssigkeitsdampf im sogenannten Nassdampfgebiet zeichnet sich dadurch aus, dass er weder vollständig in flüssiger Form, noch vollständig in Dampfform vorliegt, sondern stets Teile der Flüssigkeit im flüssigen Zustand, z.B. Tröpfchenform vorhanden sind und daneben stets gasförmige, dampfartige Komponenten des Flüssigkeitsdampfes gleichzeitig vorliegen. Trotz der Druckveränderung zwischen der Aufheiz- und der Abkühlphase des Werkzeuges liegt der Flüssigkeitsdampf stets in einem derartigen Nassdampfgebiet. Damit wird es erreicht, ein schnelles thermisches Ansprechverhalten des Formwerkzeuges zu erreichen. Der gleichsam gemischte Aggregatzustand des Nassdampfes für das Kühl- und Heizmedium eignet sich besonders, um Wärme vom Werkzeug abzuführen oder aufzunehmen. Auch bietet das Nassdampfgebiet des Kühl- und Heizmediums einen vorteilhaften Regelbereich zur Druckänderung des Kühl- und Heizmediums und ermöglicht hohe Durchsatzgeschwindigkeiten des Mediums durch die Werkzeugkanäle, was die Verkürzung der Zykluszeiten ermöglicht.

In vorteilhafter Ausführungsform wird innerhalb des Nassdampfgebietes und während der Aufheizphase eine Teilkondensation und während der Abkühlphase eine Teilverdampfung des Mediums im Werkzeug erreicht. Durch diese teilweise Aggregatzustandsänderung des Kühl- und Heizmediums gibt dieses Energie bzw. Wärme ab (Kondensationsvorgang) oder nimmt entsprechend Energie bzw. Wärme auf (Verdampfungsphase). Damit wird mit dem Kühl- und Heizmedium ein Doppeleffekt erreicht. Einerseits kühlt bzw. heizt es durch seine eigene innere Wärmeenergie, die sie aufnimmt oder abgibt als auch durch den für den Aggregatzustand benötigten Energieumsatz mit der Umwelt bzw. hier dem Werkzeug.

Es hat sich als besonders vorteilhaft erwiesen, bei der Erwärmung des Flüssigkeitsdampfes eine Druckerhöhung von einem Druck unterhalb 1 bar auf einen Druck über 1 bar durchzuführen und nach Erwärmung des Werkzeuges zu dessen Abkühlung den Druck des Flüssigkeitsdampfes um einen Wert unter 1 bar zu senken. Insbesondere, wenn als Kühl- oder Heizmedium Wasser verwendet wird, bildet die Druckschwelle von 1 bar eine geeignete Grenze, um durch den jeweiligen Druckaufbau bzw. Druckherabsetzung eine gewünschte Teilaggregatsänderung innerhalb des Nassdampfgebietes des Flüssigkeitsdampfes zu erreichen und die entsprechenden Energieabgabe- und -aufnahmeeffekte zu erreichen. Innerhalb des Werkzeuges bzw. innerhalb der Heiz-/Kühlkanäle wird die Temperatur von der Eingangs- bis zur Ausgangsseite auf einen im wesentlichen gleichen Wert gehalten. Dies bedeutet, dass während der Erwärmung des Werkzeugs (Kondensationsphase) die Temperatur des Flüssigkeitsdampfes im wesentlichen konstant bleibt. Auch während der Abkühlphase des Werkzeuges (Verdampfungsphase) würde die Temperatur des Flüssigkeitsdampfes im wesentlichen konstant bleiben. Im weiteren wird vorgeschlagen, vor allem während der Abkühlphase den Druck durch einen Unterdruckerzeuger aktiv abzusenken. Dadurch, dass der Druck während der Abkühlphase innerhalb der Heiz-/Kühlkanäle des Werkzeuges abfällt, wird eine Teilaggregatsänderung des Flüssigkeitsdampfes erreicht und während dieser Teilaggregatsänderung Wärmeenergie von der Werkzeugform entzogen. Dies lässt sich auch an dem Verlauf der speziellen Entropie innerhalb eines T-s-Diagramms beim Aufheizvorgang von der Trockenseite zur Nassseite darstellen, sobald diese beim Aufheizvorgang auf einer Isotherme erfolgt und beim Kühlvorgang auf einer Isotherme in die niedriger Temperatur von der Nass- zur Trockenseite verläuft.

Es hat sich als vorteilhaft erwiesen, wenn die dem Werkzeug zugeführte Temperatur des Flüssigkeitsdampfes für den Aufheizvorgang des Werkzeuges zwischen 180°C und 300°C beträgt. Während des Kühlvorganges des Werkzeuges soll die Temperatur des Flüssigkeitsdampfes weniger als 100°C betragen.

Damit ein schnelles Aufheizen und Abkühlen des Werkzeuges ermöglicht wird, ist es vorteilhaft, wenn das dampfartige Medium die Werkzeugkanäle zumindest bereichsweise mit einer Geschwindigkeit von mindestens 50 m/s durchsetzt.

In Weiterbildung der Erfindung ist das Kühl-/Heizmedium durch ein Trägermedium und ein Verdampfungsmedium zusammengesetzt, wobei das Trägermedium beispielsweise Wasser und das Verdampfungsmedium beispielsweise Ammoniak umfassen kann. Auch andere Medien-Kombinationen sind für den Einsatz als Kühl-/Heizmedium denkbar. Das Medium wird durch wenigstens eine Zuführleitung und eine Abführleitung dem Werkzeug zugeführt und bildet damit für den in den Leitungen geführten Flüssigkeitsdampf einen geschlossenen Kreislauf.

In einer bevorzugten Ausführungsform der Erfmdung wird der Flüssigkeitsdampf in einem Dampferzeuger erzeugt und nach Durchlauf des Werkzeuges über ein Rückkühlungselement dem Dampferzeuger wieder zugeleitet. Wenn hierbei die Temperatur des Flüssigkeitsdampfes nach Rückkühlung zwischen 50 und 80 °C beträgt, kann das Verfahren besonders wirtschaftlich betrieben werden. Ferner fördert dies das Prinzip des geschlossenen Kreislaufs des Flüssigkeitsdampfes und die Wirtschaftlichkeit des gesamten Verfahrens. Darüber hinaus kann zwischen dem Dampferzeuger und dem Werkzeug ein Regelventil angeordnet sein, durch welches von dem Rückkühlungselement unter Umgehung des Dampferzeugers das Heiz-/Kühlmedium dem Werkzeug zugeführt werden kann. Insbesondere kann mittels dieses Regelventils das benötigte Mischverhältnis zwischen "frisch" erzeugtem Flüssigkeitsdampf und bereits verwendeten, über das Rückführungselement dem Regelventil zugeführten Flüssigkeitsdampf eingestellt und zur Temperierung der Werkzeugform verwendet werden. Dadurch, dass nicht sämtlicher Flüssigkeitsdampf durch den Dampferzeuger geführt werden muss, wird das Verfahren vereinfacht und der Energiebedarf herabgesetzt.

Darüber hinaus hat es sich als vorteilhaft erwiesen, spezielle Vorrichtungsmerkmale für die Verwendung des oben angeführten Verfahrens vorzusehen. So ist es beispielsweise von Vorteil, wenn ein Dampferzeuger, eine Unterdruckpumpe, ein Regelventil und ein Rückkühlelement zu einer Baugruppe auf einem Grundkörper angeordnet und über Druckanschlüsse und Zuführungs- bzw. Abführungsleitungen mit dem Werkzeug einer Spritzgussmaschine verbunden ist. Mit einem derart bestückten Grundkörper kann das erfindungsgemäße Verfahren beispielsweise als einheitliche Moduleinheit an eine herkömmliche Spritzgussmaschine angekoppelt werden, so dass ein mit der Baugruppe versehener Grundkörper eine Umrüstung der herkömmlichen Spritzgussmaschine mit den erfindungsgemäßen Vorteilen des erfindungsgemäßen Verfahrens auf einfache und komfortable Weise ermöglicht.

Dabei hat es sich als vorteilhaft erwiesen, wenn der Grundkörper mit einem die Baugruppe umgebenden Gehäuse versehen ist sowie den Grundkörper Rollen zugeordnet sind. Damit wird die das erfindungsgemäße Verfahren ermöglichende Baugruppe vor äußeren mechanischen Einflüssen geschützt und ist zudem komfortabler transportierbar.

In einer vorteilhaften Ausführungsform wird das Kühl-/Heizmedium in dem Dampferzeuger verdampft und der Flüssigkeitsdampf über das Regelventil und den Druckanschlüssen dem Werkzeug zugeführt.

Über einen zweiten Druckanschluss kann der Flüssigkeitsdampf zu dem Rückkühlelement transportiert werden und von dort aus über eine Pumpe dem Dampferzeuger und/oder dem Regelventil weitergeleitet werden.

Um die Gesamtenergiebilanz des erfindungsgemäßen Verfahrens bzw. deren Vorrichtung zu verbessern, ist es vorgesehen, ein mit einem Generator verbundenen Expander zwischen dem Werkzeug und dem Rückkühlelement anzuordnen. Dadurch kann das aus dem Werkzeug herausgeführte Kühl-/Heizmedium mit seinem Restdruck elektrische Energie erzeugen, die beispielsweise der Pumpe und/oder der Ventilsteuerung zugeführt werden kann. Dabei ist der Expander und/oder der Generator vorzugsweise Bestandteil der Baugruppe und des Grundkörpers.

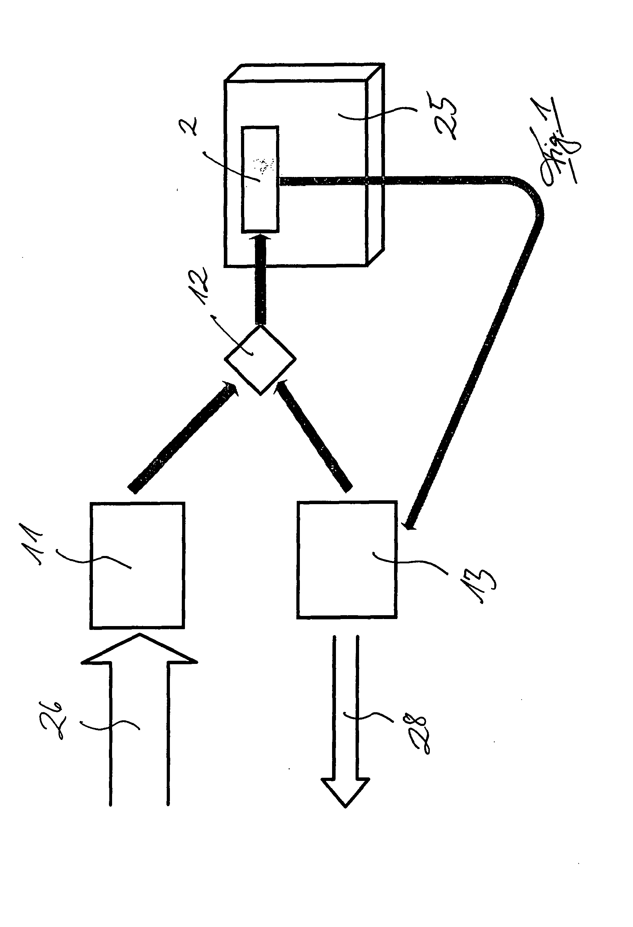

Die Erfindung ist anhand von Ausführungsbeispielen in den Zeichnungsfiguren näher erläutert. Diese zeigen
- Fig. 1: eine schematische Blockbilddarstellung der wesentlichen Verfahrensschritte;

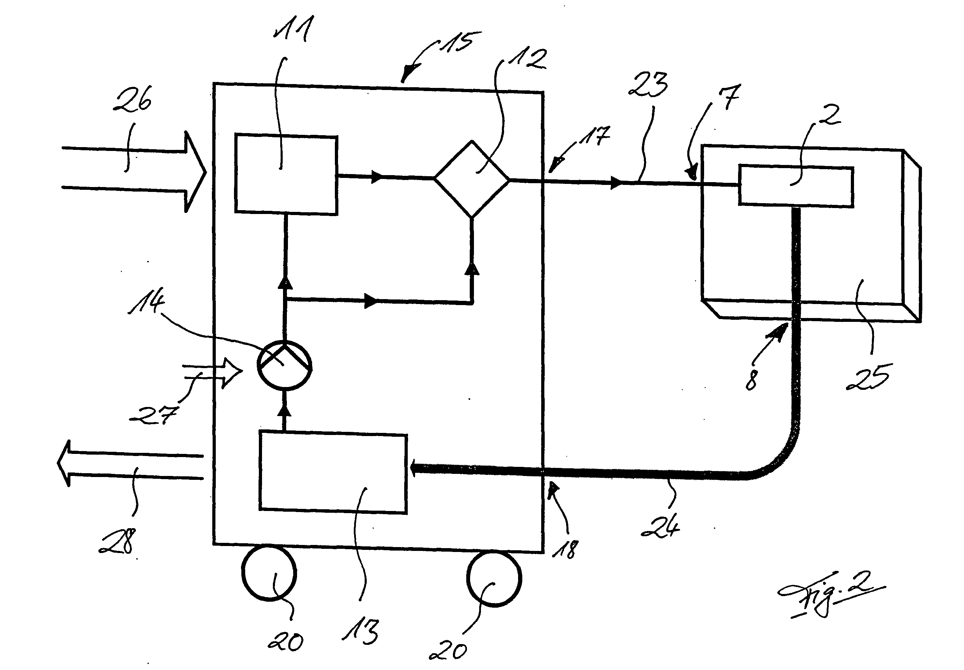

- Fig. 2: eine schematische Blockbilddarstellung der wesentlichen Verfahrensbestandteile, die zum Teil als mobile Einheit (Baugruppe) ausgebildet sind;

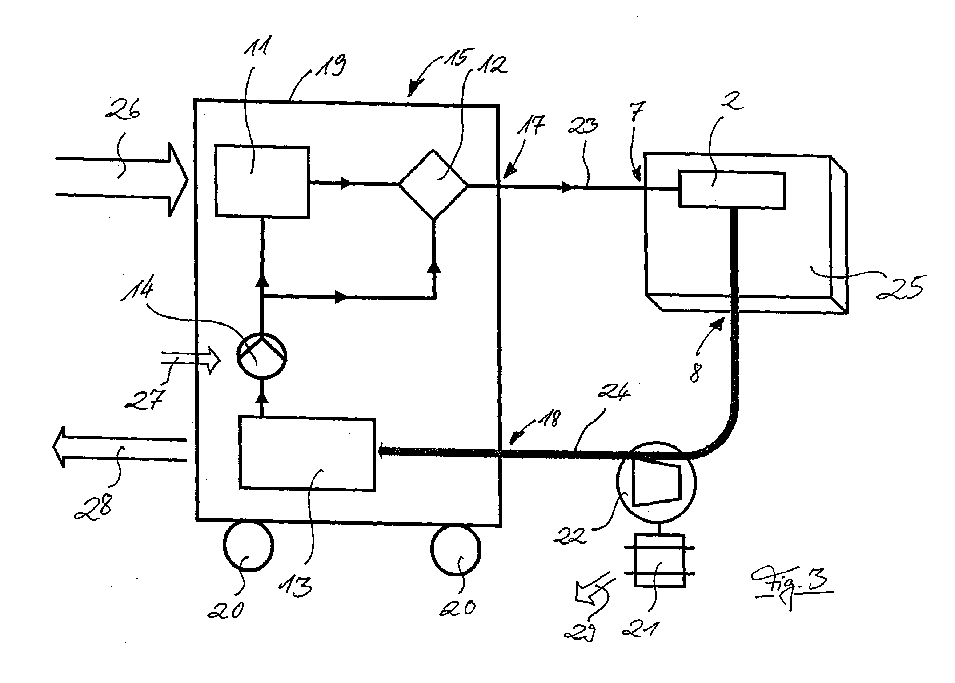

- Fig. 3: eine schematische Blockbilddarstellung einer weiteren Ausführungsform aufweisend einen Expander;
- Fig. 4: eine schematische Darstellung eines Ablaufdiagramms des Temperaturverhaltens über einen Spritzgusszyklus eines Spritzgieß- oder Thermoformwerkzeuges nach dem Stand der Technik;
- Fig. 5: ein schematisches Ablaufdiagramm des Temperaturverhaltens eines Spritzgieß- oder Thermoformwerkzeuges nach dem erfindungsgemäßen Verfahren;

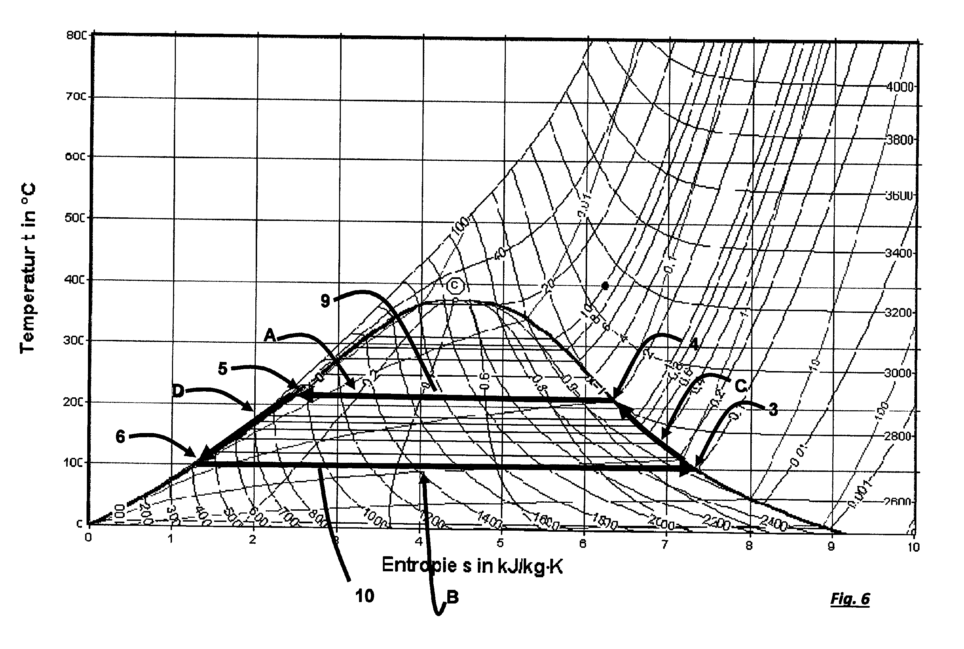

- Fig. 6: eine schematische Diagrammdarstellung des T-s-Diagramms für das Temperiermedium Wasser mit markierter Abkühlungs- und Erwärmungsisotherme.

Die in Zeichnungsfigur 1 dargestellte Blockbilddarstellung zeigt die wesentlichen Bestandteile des Verfahrens, wobei zur zyklusabhängigen Temperierung des Werkzeuges 1 einer Spritzgießmaschine 25 innerhalb wenigstens eines ersten Zyklusabschnittes A gezielt aufgeheizt und innerhalb wenigstens eines zweiten Zyklusabschnittes B gezielt gekühlt wird, wozu in dem Werkzeug 1 angeordnete Heiz-/Kühlkanäle von wenigstens einem die Form aufheizenden oder abkühlenden Medium 2 durchströmt wird. Hierzu wird sowohl als Kühl- als auch als Heizmedium 2 ein im Nassdampfgebiet gehaltener Flüssigkeitsdampf verwendet, wobei der Flüssigkeitsdampf während der Aufheizphase A des Werkzeuges 1 mit hohem Druck und während einer Abkühlphase B des Werkzeuges 1 mit niedrigem Druck beaufschlagt wird.

Zeichnungsfigur 6 zeigt das T-s-Diagramm für Wasser. Für den bevorzugten Anwendungsfall, dass als Kühl-/Heizmedium 2 Wasser verwendet wird, ist der Kreisprozess der Temperierung des Spritzgieß- oder Thermoformwerkzeuges 1 dargestellt. Hierbei ist erkennbar, dass im Werkzeug 1 während der Aufheizphase A des Werkzeuges 1 eine Kondensation des Mediums 2 innerhalb des Nassdampfgebietes und während der Abkühlphase B des Werkzeuges 1 eine Verdampfung des Mediums innerhalb des Nassdampfgebietes erfolgt. Ferner geht aus der Zeichnungsfigur 6 hervor, dass am Startpunkt 3 der Erwärmung des Flüssigkeitsdampfes eine Druckerhöhung von einem Druck unterhalb 1 bar, nämlich 0,5 bar auf einen Druck über 1 bar durchgeführt wird, so dass am Zielpunkt 4 der Erwärmung C des Flüssigkeitsdampfes ca. 15 bar beträgt. Nach der Erwärmung A des Werkzeuges 1 wird zu dessen Abkühlung B der Druck des Flüssigkeitsdampfes von dem Startpunkt 5 der Abkühlung D des Flüssigkeitsdampfes zu dem Zielpunkt 6 zur Abkühlung D des Flüssigkeitsdampfes der Druck von 15 auf 0,5 bar abgesenkt. Während der Erwärmungsphase A und der Abkühlphase B des Werkzeuges 1 wird die Temperatur des Mediums 2 auf der Eingangs- und Ausgangsseite 7, 8 der Heiz-/Kühlkanäle auf einem im wesentlichen gleichen Wert gehalten. Dies kann insbesondere an der parallel zur X-Achse verlaufenden isothermen Linien 9, 10 der Erwärmungs- und Abkühlphase A, B des Werkzeuges 1 nachvollzogen werden. Dies bedeutet, dass während der Erwärmung A des Werkzeuges 1 (Kondensationsphase) die Temperatur des Flüssigkeitsdampfes im wesentlichen konstant gehalten wird. Dies trifft ebenso auf die Abkühlphase B (Verdampfungsphase) des Flüssigkeitsdampfes zu.

Während der Aufheiz- bzw. Abkühlphase A, B des Werkzeuges 1 verläuft der Kreisprozess auf einer speziellen Entropie innerhalb des T-s-Diagramms, wobei während des Aufheizvorganges A von der Trockenseite zur Nassseite auf einer Isotherme 9 höherer Temperatur erfolgt und beim Abkühlvorgang B auf eine Isotherme 10 niedriger Temperatur von der Nass- zur Trockenseite verläuft.

Während des Aufheizvorganges A des Werkzeuges 1 beträgt die Temperatur des Flüssigkeitsdampfes zwischen 180 und 300 °C, in dem dargestellten T-s-Diagramm liegt die Erwärmungsisotherme 9 auf einer Temperatur von ca. 180 °C. Während des Abkühlvorganges B des Werkzeuges 1 wird die Temperatur des Flüssigkeitsdampfes auf weniger als 100 °C gehalten, in der dargestellten Ausführungsform verläuft die Abkühlungsisotherme 10 auf einen Wert von ca. 80 C.

In den Zeichnungsfiguren 1 - 3 sind die wesentlichen Elemente der erfindungsgemäßen Vorrichtung zur Durchführung des erfindungsgemäßen Verfahrens beschrieben. Diese Vorrichtung umfasst einen Dampferzeuger 11, in ihm wird das Kühl-/Heizmedium 2 verdampft, so dass das Kühl-/Heizmedium 2 im Nassdampfgebiet liegt. Dieses nun als Flüssigkeitsdampf vorliegende Kühl-/Heizmedium 2 wird über ein Regelventil 12 über den Druckanschlussausgang 17, die Zuführleitung 23 und die Eingangsseite 7 dem Spritzgieß- oder Thermoformwerkzeug 1 der Spritzgussmaschine 25 zugeführt. Über die Ausgangsseite 8, die Abführleitung 24 und den Druckanschlusseingang 18 wird das Kühl-/Heizmedium 2 einem Rückkühlelement 13 zugeführt, in dem es heruntergekühlt wird. Von dem Rückkühlelement 13 wird über die Unterdruckpumpe 14 das Kühl-/Heizmedium 2 wieder dem Dampferzeuger 11 und/oder dem Regelventil 12 zur erneuten Verdampfung bzw. Zuleitung zu dem Spritzgieß- oder Thermoformwerkzeug 1 zugeleitet. Der Dampferzeuger 11, die Unterdruckpumpe 14, das Regelventil 12 und das Rückkühlelement 13 bilden hierbei eine Baugruppe 15, die - wie dargestellt - auf einem Grundkörper 16, der beispielsweise eine mobil bewegbare Einheit bildet, angeordnet sind. Diese mobile Grundkörpereinheit 16 ist über Druckanschlüsse 17, 18 mit den Eingangs-und Ausgangsanschlüssen 7, 8 des Werkzeuges 1 der Spritzgießmaschine wirkverbunden, wobei hierfür jeweils eine Zuführ- und Abführleitung 23, 24 vorgesehen ist.

Der Grundkörper 16 ist dabei mit einem die Baugruppe zumindest bereichsweise umgebenden Gehäuse 19 umschlossen und an seiner Unterseite mit Rollen 20 versehen, so dass die Baugruppe 15 auf einfache Weise zum Einsatzort transportierbar ist.

In der Ausführungsform gemäß Zeichnungsfigur 3 ist zwischen dem Werkzeug 1 und dem Rückkühlelement 13 ein mit einem Generator 21 verbundene Expander 22 angeordnet. Grundsätzlich wird dem Gesamtsystem zur Dampferzeugung und zur Förderung des Kühl-/Heizmediums 2 Energie (Pfeile 26, 27) dem Dampferzeuger sowie der Unterdruckpumpe 14 zugeführt. Am Rückkühlelement 13 sowie an dem über den Expander 22 angetriebenen Generator 21 erfolgt eine Energieabfuhr (Pfeile 28, 29). Insbesondere durch das Vorsehen des Expanders 22, der den Restdruck des ausgangsseitig von dem Spritzgieß- oder Thermoformwerkzeug 1 ausgeleiteten Kühl-/Heizmediums 2 herabsenkt und durch Antreiben des Generators 21 dabei elektrische Energie erzeugt.

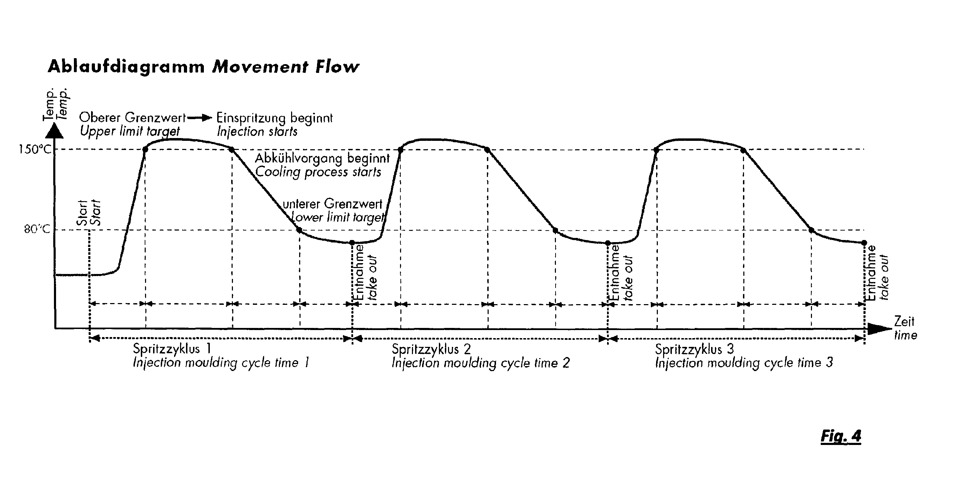

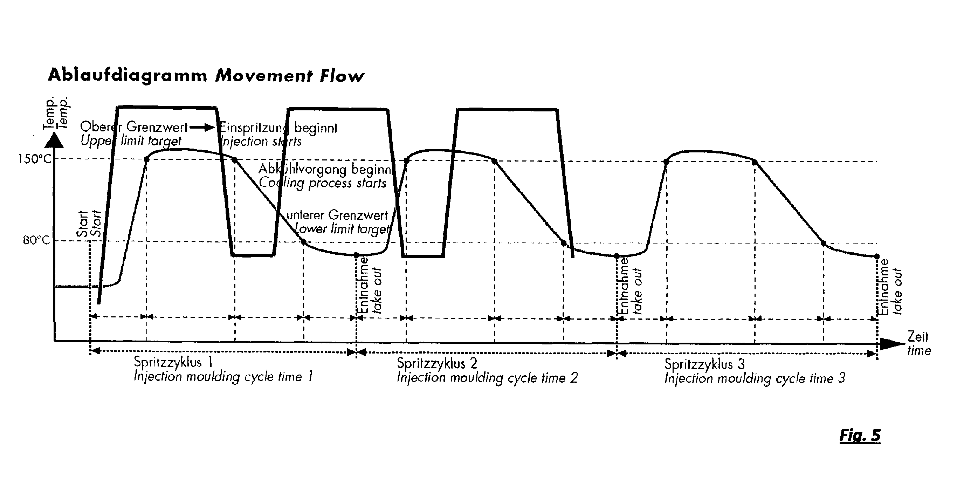

In den Zeichnungsfiguren 4 und 5 ist das Ablaufdiagramm des Temperaturverlaufs innerhalb eines Spritzgusszyklus gemäß dem Stand der Technik (Figur 4) und dem erfindungsgemäßen Verfahren (Figur 5) dargestellt. Hierbei wird deutlich, dass der obere Grenzwert des Standes der Technik für die Temperierung bei etwa 150 °C liegt, wobei das erfindungsgemäße Verfahren, insbesondere durch das in Nassdampf-Form vorliegende Medium 2 eine höhere Temperatur erreichbar ist. Auch ist erkennbar, dass die Zyklusdauer (X-Achse) stark reduzierbar ist, so dass innerhalb eines doppelten Zyklus gemäß dem Stand der Technik drei Temperierzyklen durch das erfindungsgemäße Verfahren realisierbar sind. Die Temperaturgradienten 30, 30', 30" des erfindungsgemäßen Verfahrens verlaufen steiler als die Temperaturgradienten 31, 31', 31" des Standes der Technik.

### BEZUGSZEICHENLISTE

- A: erster Zyklusabschnitt (Aufheizen)
- B: zweiter Zyklusabschnitt (Abkühlen)
- C: Erwärmung (Medium)
- D: Abkühlung (Medium)
- 1: Spritzgieß- oder Thermoformwerkzeug
- 2: Kühl-/Heizmedium
- 3: Startpunkt
- 4: Zielpunkt
- 5: Startpunkt
- 6: Zielpunkt
- 7: Eingangsseite
- 8: Ausgangsseite
- 9: Isotherme (Aufheizvorgang)
- 10: Isotherme (Kühlvorgang)
- 11: Dampferzeuger
- 12: Regelventil
- 13: Rückkühlelement
- 14: Unterdruckpumpe
- 15: Baugruppe
- 16: Grundkörper
- 17: Druckanschluss (Ausgang)
- 18: Druckanschluss (Eingang)
- 19: Gehäuse
- 20, 20': Rolle
- 21: Generator
- 22: Expander
- 23: Zuführleitung
- 24: Abführleitung
- 25: Spritzgussmaschine
- 26: Pfeil
- 27: Pfeil
- 28: Pfeil
- 29: Pfeil
- 30,30',30": Temperaturgradient
- 31,31',31": Temperaturgradient

## Patentansprüche

1. Verfahren zur zyklusabhängigen Temperierung eines Spritzgieß- oder Thermoformwerkzeuges, wobei das Werkzeug (1) innerhalb wenigstens eines ersten Zyklenabschnittes (A) gezielt aufgeheizt und innerhalb wenigstens eines zweiten Zyklenabschnittes (B) gezielt gekühlt wird, wozu in dem Werkzeug (1) angeordnete Heiz-/Kühlkanäle von wenigstens einem die Form aufheizenden oder abkühlenden Medium (2) durchströmt werden,
**dadurch gekennzeichnet, dass**
sowohl als Kühl- als auch als Heizmedium (2) ausschließlich im Nassdampfgebiet gehaltener Flüssigkeitsdampf verwendet wird, wobei der Flüssigkeitsdampf während einer Aufheizphase (A) mit hohem Druck und während einer Abkühlphase (B) mit niedrigem Druck beaufschlagt wird.

2. Verfahren nach Anspruch 1,
**dadurch gekennzeichnet, dass**
im Werkzeug (1) während der Aufheizphase (A) eine Kondensation des Mediums (2) innerhalb des Nassdampfgebiets und während der Abkühlphase (B) eine Verdampfung des Mediums (2) innerhalb des Nassdampfgebietes erfolgt.

3. Verfahren nach Anspruch 1 oder 2,
**dadurch gekennzeichnet, dass**
bei der Erwärmung des Flüssigkeitsdampfes eine Druckerhöhung von einem Druck unterhalb ein bar auf einen Druck über ein bar durchgeführt wird und nach Erwärmung des Werkzeuges (1) zu dessen Abkühlung der Druck des Flüssigkeitsdampfes auf einen Wert unter ein bar abgesenkt wird.

4. Verfahren nach einem der Ansprüche 1 - 3,
**dadurch gekennzeichnet, dass**
die Temperatur des Mediums (2) auf der Eingangs- und Ausgangsseite (7, 8) der Heiz-/Kühlkanäle auf einem im wesentlichen gleichen Wert gehalten wird.

5. Verfahren nach einem der vorhergehenden Ansprüche,
**dadurch gekennzeichnet, dass**
während der Erwärmung (A) des Werkzeuges (1) (Kondensationsphase) die Temperatur des Flüssigkeitsdampfes im wesentlichen konstant gehalten wird.

6. Verfahren nach einem der vorhergehenden Ansprüche,
**dadurch gekennzeichnet, dass**
während der Abkühlphase (B) (Verdampfungsphase) die Temperatur des Flüssigkeitsdampfes im wesentlichen konstant gehalten wird.

7. Verfahren nach einem der vorhergehenden Ansprüche,
**dadurch gekennzeichnet, dass**
der Druck des Mediums (2) zumindest während der Abkühlphase (D) des Mediums (2) aktiv durch einen Unterdruckerzeuger abgesenkt wird.

8. Verfahren nach einem der vorhergehenden Ansprüche,
**dadurch gekennzeichnet, dass**
die dem Werkzeug (1) für den Aufheizvorgang (A) zugeführte Temperatur des Flüssigkeitsdampfes zwischen 180 und 300° C beträgt.

9. Verfahren nach einem der vorhergehenden Ansprüche,
**dadurch gekennzeichnet, dass**
die Temperatur des Flüssigkeitsdampfes beim Abkühlvorgang (B) des Werkzeuges (1) weniger als 100° C beträgt.

10. Verfahren nach einem der vorhergehenden Ansprüche,
**dadurch gekennzeichnet, dass**
das Kühl-/Heizmedium (2) aus einem Gemisch eines Trägermediums und eines Verdampfungsmediums besteht.

11. Verfahren nach einem der vorhergehenden Ansprüche,
**dadurch gekennzeichnet, dass**
der Flüssigkeitsdampf in einem geschlossenen Kreislauf geführt wird.

12. Verfahren nach einem der vorhergehenden Ansprüche,
**dadurch gekennzeichnet, dass**
der Flüssigkeitsdampf in einem Dampferzeuger (11) erzeugt wird und nach Austritt aus dem Werkzeug (1) über ein Rückkühlungselement (13) dem Dampferzeuger (11) wieder zugeleitet wird, wobei die Temperatur des Flüssigkeitsdampfes nach der Rückkühlung durch das Rückkühlelement (13) im Bereich zwischen 50 und 80° C liegt.

13. Vorrichtung zur zyklusabhängigen Temperierung eines Spritzgieß- oder Thermoformwerkzeuges (1), das zur Durchführung des Verfahrens der Ansprüche 1 - 12 betreibbar ist, wobei ein Dampferzeuger (11), eine Unterdruckpumpe (14), ein Regelventil (12) und ein Rückkühlelement (13) zu einer Baugruppe (15) auf einem Grundkörper (16) angeordnet und über Druckanschlüsse (17, 18) Zuführ- und Abführleitungen (23, 24) mit dem Werkzeug (1) einer Spritzgießmaschine (25) wirkverbunden sind, wobei an der Eingangsseite (7) des Werkzeuges (1) über Druckanschlüsse (17) und Zuführleitungen (23) ein Kühl-/Heizmedium (2) über das Regelventil (12) als im Nassdampfgebiet gehaltener Flüssigkeitsdampf zuführbar ist.

14. Vorrichtung nach Anspruch 13,
**dadurch gekennzeichnet, dass**
zwischen dem Werkzeug (1) und dem Rückkühlelement (13) ein mit einem Generator (21) verbundener Expander (22) angeordnet ist.

15. Vorrichtung nach Anspruch 14,
**dadurch gekennzeichnet, dass**
der Expander (22) und/oder der Generator (21) auf dem Grundkörper (16) angeordnet ist.
